# EUROPÄISCHE PATENTSCHRIFT

(11) **EP 1 542 853 B1**
(45) Veröffentlichungstag und Bekanntmachung des Hinweises auf die Patenterteilung: **04.01.2006**
(21) Anmeldenummer: 03750290.3
(22) Anmeldetag: 28.08.2003
(51) Int. Cl.: B29C 47/60, B29C 47/62

(54) **PLASTIZIERSCHNECKE FÜR EINEN EXTRUDER ODER EINE STRANGPRESSE MIT IM ÜBERGANG DÜNNERER STEGBREITE**
PLASTIFYING SCREW FOR AN EXTRUDER OR A FORCING MACHINE, HAVING A NARROWER THREAD WIDTH IN THE TRANSITION REGION
VIS DE PLASTIFICATION POUR UNE EXTRUDEUSE OU UNE BOUDINEUSE, PRESENTANT UNE PLUS FAIBLE LARGEUR DE FILET DANS LA ZONE DE TRANSITION

(30) Priorität: 27.09.2002 DE 10245278
(43) Veröffentlichungstag der Anmeldung: 22.06.2005
(73) Patentinhaber: LINDAUER DORNIER GESELLSCHAFT M.B.H, 88129 Lindau (DE)
(72) Erfinder: MUELLER, Friedrich, 88079 Kressbronn (DE)
(86) Internationale Anmeldenummer: PCT/DE2003/002860
(87) Internationale Veröffentlichungsnummer: WO 2004/030893

(56) Entgegenhaltungen:
- US-A- 3 273 201
- US-A- 3 946 998

## Beschreibung

Die Erfindung betrifft eine Plastizierschnecke für einen Extruder oder eine Strangpresse mit hohem Polymerschmelzedurchsatz nach den Merkmalen des Oberbegriffs von Patentanspruch 1.
Die Erfindung bezieht sich insbesonders auf die Dosierzone einer solchen Plastizierschnecke. Bei Plastizierschnecken folgt eine solche Dosierzone unmittelbar der Plastizierungszone. Dieser auch mit Druckzone bezeichnete Abschnitt der Schnecke durchmischt das aufgeschmolzene Granulat und fördert das plastizierte Material unter Druck in Richtung einer Extruderdüse weiter.
Das Vermischen in dieser Zone ist eine wichtige Aufgabe einer Extruderschnecke , da das plastizierte Material noch inhomogen ist, d.h., dass noch unplastizierte Bestandteile vorhanden sein können, die noch aufzuschmelzen sind.
Aus der Inhomogenität ergeben sich unterschiedliche Scherkräfte an den Schneckenwänden und in der Mitte des Schneckenkanals, wodurch eine innige Vermischung des Materials verhindert wird und sich auch Druckschwankungen im Material ergeben können. Zur Behebung dieses Problems sind z. B. Schnecken mit sich verjüngendem Schneckenkanal, mit Leitstegen in der Hauptschneckenwindung als auch Plastizierschnecken mit einem oder mit mehreren dieser vorgenannten Merkmale gemeinsam vorgeschlagen worden.
In der WO 00/34027, DE 196 34 162 C2 und US 5,599,098 sind z. B. solche Plastizierschnecken u.a. vorbeschrieben.
In der WO 00/34027 wird im Zusammenhang mit Leitstegen das Prinzip der Gangvertiefung beschrieben.
Im DE-Patent 196 34 162 C2 ist zur Minimierung von Rand-Dickenschwankungen bei bandförmigem Gut eine Hilfsschnecke vor dem Ende der Plastizierschnecke vorgesehen. Das US-Patent 5,599,098 beschreibt eine Extruderschnecke mit einem Schmelzabschnitt für Kunststoff, der aus Schneckengängen besteht, die sich teilweise überlappen. Dabei wird der Materialfluß beim Beginn der überlappenden Schneckengänge in zwei Teilschmelzen aufgeteilt, wobei sich die Fließgeschwindigkeit und damit der Druck des Materials aufgrund des kleineren Gesamtquerschnitts erhöht. Der neu beginnende Schneckengang wird fortgesetzt, während der ursprüngliche Schneckengang nach 1/2 - 1 Umdrehung in Fließrichtung ausläuft.
Nachteilig an dieser Lösung ist, daß sich der verfügbare Querschnitt der überlappenden Schneckengänge besonders bei hohem Materialdurchsatz mindestens um einen Schneckenwandquerschnitt verkleinert. Damit ist gleichzeitig eine plötzliche Druckerhöhung verbunden.

Aufgabe der vorliegenden Erfindung ist es, für einen Extruder oder eine Stangpresse eine Plastizierschnecke für einen hohen Materialdurchsatz so auszubilden, dass im Bereich des oder der Stegwechsel eine Volumenänderung des Förderquerschnitts und damit eine plötzliche Druckerhöhung in der Polymerschmelze unterbleibt.
Zum langsamen Aufbau eines notwendigen Druckes sollen geeignete Maßnahmen vorgesehen werden.
Die Aufgabe wird erfindungsgemäß dadurch gelöst, dass die Querschnitte der Schneckenstege im überlappenden Bereich derart reduziert sind, dass der gemeinsame Förderquerschnitt der Schneckengänge im Bereich der sich überlappenden Schneckenstege dem Förderquerschnitt des Schneckenganges unmittelbar vor der Überlappung der Schneckenstege entspricht. Dabei ist besonders der eigentliche Querschnittsübergang vom einwendeligen auf den zweiwendeligen Förderquerschnitt so gestaltet, dass sich auch in diesem Übergangsbereich keine Querschnittsveränderung ergibt.

Um in der Druckzone einen langsamen Druckaufbau zu erhalten ist erfindungsgemäß vorgesehen, dass der zumindest eine Stegwechsel in dieser Zone erfindungsgemäß ausgebildet ist und sich zur Druckerhöhung der Schaftdurchmesser der Schnecke in dieser Zone allmählich vergrößert. Dadurch wird ein plötzlicher Druckaufbau in der Polymerschmelze am Anfang des Stegwechsels vermieden und sowohl ein gleichmäßiger Fluß der Polymerschmelze erreicht, als auch die gewünschte Vermischung der Schmelze durch den Stegwechsel vorgenommen. Weiter stromabwärts in Flußrichtung angeordnete erfindungsgemäße Stegwechsel können der weiteren intensiven Vermischung der Polymerschmelze dienen.
Für eine gewünschte Druckentlastung vor der Extruderdüse ist femer vorgesehen, dass sich der Schneckenschaft in einem Bereich zwischen zwei Stegwechseln achsparallel über 360° verjüngt.

Die Erfindung wird nachfolgend an einem Ausführungsbeispiel näher erläutert.

In den anliegenden Zeichnungen zeigen:
- Figur 1: eine erfindungsgemäße Plastizierschnecke mit mehreren Überlappungen eines ersten und zweiten Schneckensteges und die dazugehörige Abwicklung,
- Figur 2: eine Abwicklung gemäß Figur 1,
- Figur 3: den Querschnitt eines Schneckensteges einer erfindungsgemäßen Plastizierschnecke,
- Figur 4: den Beginn einer Überlappungszone.

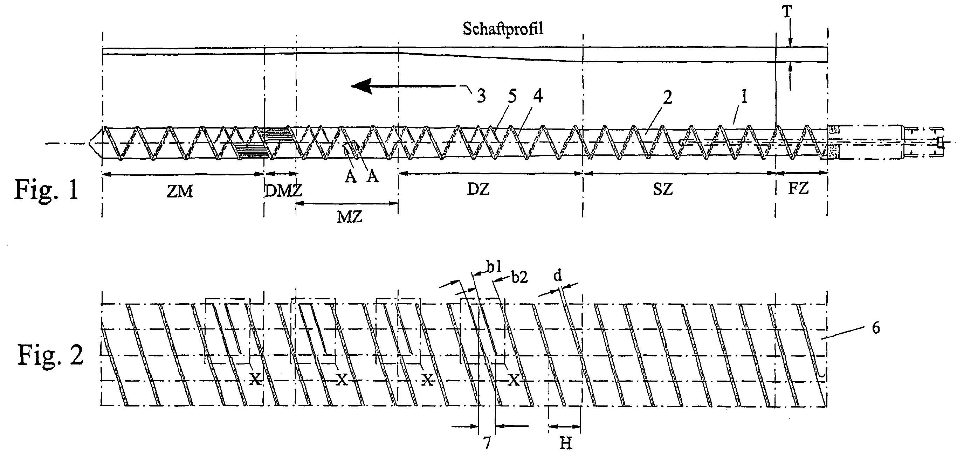

Figur 1 zeigt die erfindungsgemäße Plastizierschnecke **1** zur Plastizierung eines plastizierbaren Polymer-Materials mit mehreren Überlappungen eines ersten und zweiten Schneckenganges **4, 5** in Materialflußrichtung **3** von rechts nach links, wobei zumindest ein Stegwechsel im Bereich der Druckzone **DZ** liegt und weitere Stegwechsel vor und nach einer Druckminderungszone **DMZ** vorgesehen sein können. Ein Polymer wird der Plastizierschnecke auf der rechten Seite in einer Füllzone **FZ** der Plastizierschnecke **1** zugeführt und in der anschließenden Schmelzzone **SZ** größtenteils plastiziert. In der sich links anschließenden Druckzone **DZ** wird durch eine allmähliche Vergrößerung des Schneckenschaftdurchmessers die Gangtiefe T des Schneckenganges **2** vermindert und damit der Druck der Schmelze erhöht. Durch den in diesem Bereich liegenden erfindungsgemäßen Stegwechsel wird die Schmelze durchmischt, um etwaige noch unaufgeschmolzene Polymer-Bestandteile aufzuschmelzen, ohne dass sich am Beginn dieses Stegwechsel oder in seinem weiteren Verlauf eine plötzliche Druckerhöhung ergibt. In einer Mischzone **MZ** sind weitere erfindungsgemäße Stegwechsel angeordnet um eine noch intensivere Durchmischung der Schmelze zu erreichen. In einer gegebenenfalls vorzusehenden Druckminderungszone **DMZ** wird die Gangtiefe z. B. achsparallel vermindert und damit eine Druckentlastung erzielt, bevor die Schmelze über eine Zumesszone **ZM** der Düse zugeführt wird.

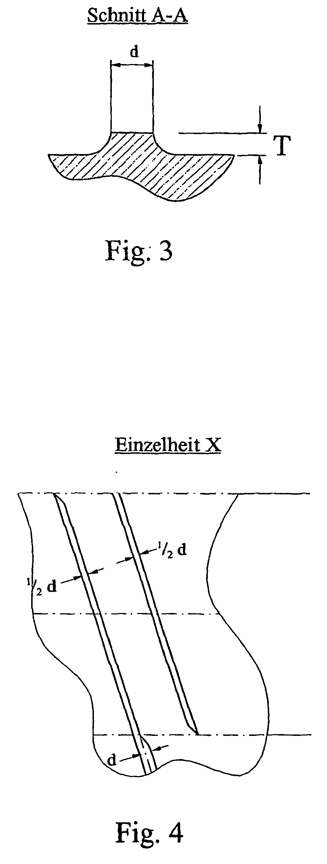

Figur 2 zeigt die dazugehörige Abwicklung **6.** Das Verhältnis der Gangbreiten **b1, b2** im überlappenden Bereich 7 beträgt etwa 1:2.
Figur 3 zeigt den Querschnitt eines Steges **4** einer erfindungsgemäßen Plastizierschnecke **1.**
Figur 4 zeigt als Einzelheit **X** den Beginn einer Stegüberlappung mit einer Querschnittsänderung der Stege **4,5** in der Draufsicht, wobei außerhalb der Überlappung die Stegbreite **d** beträgt und innerhalb der Überlappung die Stegbreiten ½ **d** betragen.

## Patentansprüche

1. Plastizierschnecke für einen Extruder oder eine Strangpresse mit hohem Polymerschmelzedurchsatz, wobei die Plastizierschnecke in einem Zylinderrohr drehbar angetrieben und aufgenommen ist, um das zugeführte plastizierbare Polymer zu einer am anderen Ende gelegenen Extruderdüse zu transportieren, wobei das Polymer plastiziert und durch einen von einem ersten wendelartig umlaufenden Schneckensteg gebildeten Schneckengang transportiert und gemischt wird, und wobei in wenigstens einem Bereich der Längserstreckung der Plastizierschnecke zumindest ein zweiter wendelartig umlaufender Schneckensteg den ersten Schneckensteg überlappt, **dadurch gekennzeichnet, dass** die Querschnitte der zumindest zwei Schneckenstege (4,5) im überlappenden Bereich soweit reduziert sind, dass ihr Gesamtquerschnitt dem Querschnitt des ersten Schneckenstegs (4) unmittelbar vor dem überlappenden Bereich (7) entspricht.

2. Plastizierschnecke nach Anspruch 1, **dadurch gekennzeichnet, dass** im Bereich der Überlappung der zweite Schneckensteg (5) die Gangbreite des Schneckengangs (2) unterteilt.

3. Plastizierschnecke nach Anspruch 1, **dadurch gekennzeichnet, dass** sich der Schneckengang (2) nach Beginn des zweiten Schneckensteges (5) in Materialflußrichtung als doppelter Schneckengang fortsetzt.

4. Plastizierschnecke nach Anspruch 1 bis 3, **dadurch gekennzeichnet, dass** sich der überlappende Bereich der mindestens zwei Schneckengänge über mindestens eine halbe Schneckendrehung erstreckt.

5. Plastizierschnecke nach Anspruch 1 bis 4, **dadurch gekennzeichnet, dass** die Gangbreite (H) des Schneckenganges (2) im überlappenden Bereich durch den zweiten Schneckensteg (5) etwa im Verhältnis 1:2 unterteilt ist.

6. Plastizierschnecke nach Anspruch 1 bis 5, **dadurch gekennzeichnet, dass** im Bereich der zumindest einen Überlappung der Schneckenstege der Schneckenschaft konisch verändert ist.

7. Plastizierschnecke nach Anspruch 1 bis 6, **dadurch gekennzeichnet, dass** die Gangtiefe T zwischen zumindest zwei weiteren Überlappungen über 360 Grad im Sinne einer Schneckenschaftverjüngung achsparallel verändert ist.

## Claims

1. Plasticizing screw for an extruder or extruding press having a high throughput of polymer melt, the plasticizing screw being rotatably driven and received in a barrel tube in order to transport the supplied plasticizable polymer to an extrusion die disposed at the other end, the polymer being plasticized and being transported and mixed by a screw channel formed by a first flight revolving in a helical manner, and at least a second flight which revolves in a helical manner overlapping the first flight in at least one region of the longitudinal extent of the plasticizing screw, **characterised in that** the cross-sections of the at least two flights (4, 5) are reduced in the overlapping region to an extent such that their total cross-section corresponds to the cross-section of the first flight (4) immediately upstream of the overlapping region (7).

2. Plasticizing screw according to claim 1, **characterised in that,** in the region of the overlap, the second flight (5) divides the channel width of the screw channel (2).

3. Plasticizing screw according to claim 1, **characterised in that**, after the start of the second flight (5), the screw channel (2) continues in the material flow direction as a double screw channel.

4. Plasticizing screw according to claims 1 to 3, **characterised in that** the overlapping region of the at least two screw channels extends over at least half a screw revolution.

5. Plasticizing screw according to claims 1 to 4, **characterised in that** the channel width (H) of the screw channel (2) in the overlapping region is divided by the second flight (5) approximately in the ratio of 1:2.

6. Plasticizing screw according to claims 1 to 5, **characterised in that,** in the region of the at least one overlap of the flights, the screw shaft is conically changed.

7. Plasticizing screw according to claims 1 to 6, **characterised in that** the channel depth T is changed parallel to the axis over 360 degrees between at least two further overlaps to produce a tapering of the screw shaft.

## Revendications

1. Vis sans fin de plastification pour une extrudeuse ou une presse à filage avec un haut débit de coulée de polymère, la vis sans fin plastifiante étant entraînée et logée de manière rotative dans un tube cylindrique afin de transporter le polymère plastifiable introduit vers une buse extrudeuse disposée au niveau d'une autre extrémité, le polymère étant plastifié, transporté et mélangé à travers un pas de vis constitué d'une première crête de vis à rotation hélicoïdale et au moins une deuxième crête de vis à rotation hélicoïdale recouvrant la première crête de vis sur au moins une partie de l'extension longitudinale de la vis sans fin plastifiante, **caractérisée en ce que** les sections transversales des deux crêtes de vis (4, 5) sont réduites dans la zone de chevauchement de telle sorte que leur section totale corresponde à la section transversale de la première crête de vis (4) immédiatement avant la zone de chevauchement (7).

2. Vis sans fin de plastification selon la revendication 1, **caractérisé en ce que**, dans la zone de chevauchement, la deuxième crête de vis (5) divise la largeur du pas de la vis (2).

3. Vis sans fin de plastification selon la revendication 1, **caractérisé en ce que** le pas de vis (2) se continue, après le début de la deuxième crête de vis (5), dans la direction de l'écoulement de la matière, comme un double pas de vis.

4. Vis sans fin de plastification selon l'une des revendications 1 à 3, **caractérisé en ce que** la zone de chevauchement des deux pas de vis s'étend sur au moins un demi-tour de vis.

5. Vis sans fin de plastification selon l'une des revendications 1 à 4, **caractérisé en ce que** la largeur (H) du pas de vis (2) est divisée, dans la zone de chevauchement, par le deuxième pas de vis (5), d'un rapport d'environ 1:2.

6. Vis sans fin de plastification selon l'une des revendications 1 à 5, **caractérisé en ce que** dans la zone de chevauchement des crêtes de vis, la partie lisse de la vis varie de manière conique.

7. Vis sans fin de plastification selon l'une des revendications 1 à 6, **caractérisé en ce que** la profondeur du pas T entre au moins deux autres chevauchements est modifiée parallèlement à l'axe sur 360° dans le sens d'un rétrécissement de la partie lisse de la vis.
